(19) Europäisches Patentamt
European Patent Office
Office européen des brevets

(11) **EP 2 550 447 B1**

(12) **EUROPEAN PATENT SPECIFICATION**

(45) Date of publication and mention
of the grant of the patent:
**25.10.2017 Bulletin 2017/43**

(21) Application number: **11759791.4**

(22) Date of filing: **18.03.2011**

(51) Int Cl.:
*F02M 65/00* (2006.01)   *F02D 41/40* (2006.01)
*F01N 3/20* (2006.01)   *F01N 11/00* (2006.01)
*F02D 41/02* (2006.01)   *F02D 41/24* (2006.01)
*F02D 41/14* (2006.01)

(86) International application number:
**PCT/SE2011/050298**

(87) International publication number:
**WO 2011/119089 (29.09.2011 Gazette 2011/39)**

(54) **METHOD FOR DETERMINING A RELATIONSHIP BETWEEN THE OPERATING TIME FOR AN INJECTOR OF A CYLINDER IN A COMBUSTION ENGINE AND THE AMOUNT OF FUEL INJECTED BY THE INJECTOR**

VERFAHREN ZUR BESTIMMUNG DES VERHÄLTNISSES ZWISCHEN DER BETRIEBSZEIT EINES EINSPRITZERS FÜR EINEN ZYLINDER IN EINEM VERBRENNUNGSMOTOR UND DER MENGE DES DURCH DEN EINSPRITZER EINGESPRITZTEN KRAFTSTOFFS

PROCÉDÉ DE DÉTERMINATION D'UNE RELATION ENTRE LE TEMPS DE FONCTIONNEMENT POUR UN INJECTEUR D'UN CYLINDRE DANS UN MOTEUR À COMBUSTION ET LA QUANTITÉ DE COMBUSTIBLE INJECTÉE PAR L'INJECTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2010 SE 1050267**

(43) Date of publication of application:
**30.01.2013 Bulletin 2013/05**

(73) Proprietor: **Scania CV AB (publ)**
**151 87 Södertälje (SE)**

(72) Inventor: **STENLÅÅS, Ola**
**S-151 48 Södertälje (SE)**

(74) Representative: **Scania CV AB**
**Patents, GP 117kv**
**151 87 Södertälje (SE)**

(56) References cited:
**EP-A1- 1 429 009**   **EP-A2- 1 835 141**
**DE-A1-102005 036 956**   **DE-A1-102006 061 683**
**FR-A1- 2 935 750**   **US-A1- 2006 272 317**
**US-A1- 2009 126 346**   **US-A1- 2010 031 636**
**US-A1- 2010 050 609**

## Description

FIELD OF THE INVENTION AND PRIOR ART

The present invention relates to a method for determining a relationship between the opening time for an injector of a cylinder in a combustion engine and the amount of fuel injected by the injector. The invention relates also to a computer program product comprising computer program code for implementing a method according to the invention, and to an electronic control unit.

In this description and the claims set out below, the expression "opening time" means the duration, i.e. the length of time, of the period during which an injector is kept open to inject fuel into the relating cylinder for the purposes of an individual power stroke. The amount of fuel injected into a cylinder for the purposes of a power stroke depends on the number of times the injector is opened during the power stroke, the length of the opening time each time the injector is opened and the pressure of the fuel supplied to the injector.

A conventional combustion engine for a motor vehicle, e.g. a passenger car, truck, tractor unit or bus, is provided with injectors for injection of desired amounts of fuel at desired points in time into the engine's cylinders. The injectors are controlled by means of an engine control unit which controls the opening time or times for each individual injector in order thereby to control the amount of fuel which is to be injected into the cylinder belonging to the injector. It is usual to determine appropriate opening times for the respective injectors by means of a reference table or a computer model in which an input value in the form of a desired amount of fuel for a cylinder gives the opening times to be applied to the cylinder's injector in order to achieve injection of the desired amount of fuel into the cylinder, i.e. the set-point values for the injector's opening times. In a common rail fuel injection system, the opening time set-point value arrived at by means of such a reference table or computer model depends also on the fuel pressure in the fuel rail. The engine control unit determines the desired amount of fuel to be injected by an injector during a power stroke by means of a regulator according to the vehicle's prevailing operating conditions. On the basis of the value of this amount of fuel and, in the case of a common rail fuel injection system, the value of the prevailing fuel pressure in the fuel rail, the engine control unit determines one or more opening time set-point values for the injector by means of said reference table or computer model. Said one or more opening time set-point values are expected to result in the injection of the desired amount of fuel. Over time, however, the characteristics of the injectors will change in such a way that the opening time set-point values indicated by the reference table or the computer model no longer produce the expected amounts of fuel. Such differences between expected and actual amounts of fuel may result in uneven idling and lost pilot injections or post-injections. This problem can be mitigated by effecting fuel injection adaptation whereby the reference table or the computer model used is adjusted so that the actual amounts of fuel resulting from the opening time set-point values determined by means of the reference table or the computer model correspond better to the desired and expected amounts of fuel. To be able to effect such adaptation, the actual amount of fuel injected into a cylinder needs to be determined, which may for example be done as described in US 2009/0164094 A1, in which the amount of fuel injected is determined as a function of the measured pressure drop of the fuel in the fuel rail during a fuel injection. Pressure oscillations in the fuel rail do however make it difficult to obtain a correct value for this pressure drop, which means that the values arrived at for amounts of fuel injected are subject to errors which result in poorer adaptation.

EP 1429 009 A1 shows a diesel engine with a fuel injection quantity control apparatus.

FR 2 935 750 A1 shows a fuel quantity correcting system for a direct or indirect injection type diesel engine of a motor vehicle.

DE 10 2006 061683 A1 shows a fuel amount determining method for e.g. a diesel engine.

US 2010/050609 A1 shows an oxidation catalyst temperature control system.

US 2009/126346 A1 shows a method for controlling an engine including an oxidation catalytic converter comprising, if at least one pre-defined criterion is satisfied, calculating a maximum quantity of fuel to be post-injected based on a measured air flow rate and a limit operating temperature of the oxidation catalytic converter.

US 2010/031636 A1 shows an exhaust gas purification controller for controlling a bed temperature of a Diesel Particulate Filter.

OBJECT OF THE INVENTION

The object of the present invention is to propose a novel and advantageous way of determining a relationship between the opening time for an injector of a cylinder in a combustion engine and the amount of fuel injected by the injector, in order thereby to allow improved fuel injection adaptation.

SUMMARY OF THE INVENTION

According to the present invention, said object is achieved by means of a method having the features defined in claim 1.

The method according to the invention comprises the following steps:

     A) during a succession of power strokes in which the same opening time is applied to the injector for each of them, the injector is caused to inject fuel into the cylinder in the form of late injections which take place so late during the respective power strokes that the fuel thus injected late undergoes no combustion in the cylinder and this unburnt fuel is caused to accompany the exhaust gases produced by the engine to a fuel oxidation device situated in an exhaust line from the engine, e.g. in the form of an oxidation catalyst, in order to be oxidised in the fuel oxidation device and thereby generate an increase in the temperature of the exhaust gases passing through the fuel oxidation device,

B) a temperature increase value which represents the increase in the temperature of the exhaust gases during their passage through the fuel oxidation device is determined on the basis of measured values from a temperature sensor provided to detect the temperature of the exhaust gases upstream of the fuel oxidation device, and from another temperature sensor provided to detect the temperature of the exhaust gases downstream of the fuel oxidation device,

C) a calculation value which represents the mass flow of said unburnt injected fuel which accompanies the exhaust gases is determined on the basis of said temperature increase value, a fuel mass flow value representing the mass flow of fuel injected into and burnt in the engine and an air mass flow value representing the prevailing mass flow of air in the engine's air intake, and

D) on the basis of said calculation value and the value of the opening time applied to the injector for said late injections, a relationship is determined between the injector's opening time and the amount of fuel injected by it.

Values arrived at which represent amounts of fuel injected as a function of the injector's opening times may then be used for fuel injection adaptation in a conventional way. The solution according to the invention makes it possible to arrive at values which represent amounts of fuel injected as a function of the injector's opening times, with no need to take into account any measured values concerning the fuel pressure in the fuel rail, thereby avoiding the source of error caused by pressure oscillations in the fuel rail. A further advantage of the method according to the invention is that it allows injection and combustion of fuel in the engine's other cylinders to continue during the determination of the relationship between the opening time of the injector of the cylinder whose injector is being tested and the amount of fuel injected. This means that the method can be applied during operation, with no substantial impact on the engine's ordinary functions.

Other advantageous features of the method according to the invention are indicated by the dependent claims and the description set out below.

The invention relates also to a computer program product having the features defined in claim 7 and an electronic control unit having the features defined in claim 8.

BRIEF DESCRIPTION OF THE DRAWINGS

The invention is described below in more detail on the basis of embodiment examples with reference to the attached drawings, in which:

Fig. 1    is a schematic diagram of a combustion engine with a common rail fuel injection system and means for exhaust treatment,

Fig. 2    is a schematic diagram of a combustion engine with relating EGR system and means for exhaust treatment,

Fig. 3    is a schematic diagram of an electronic control unit for implementing a method according to the invention, and

Fig. 4    is a flowchart illustrating a method according to an embodiment of the invention.

DETAILED DESCRIPTION OF EMBODIMENTS OF THE INVENTION

The invention is described below as applied to a motor vehicle with a combustion engine which is provided with a common rail fuel injection system. The invention is nevertheless not confined to this application but may be applied in all contexts where an oxidation catalyst or some other device for oxidation of fuel is provided in the exhaust line from the engine, e.g. in a ship or a power station. The invention is also applicable to engines which have other types of fuel injection systems whereby the injectors are not connected to a fuel rail.

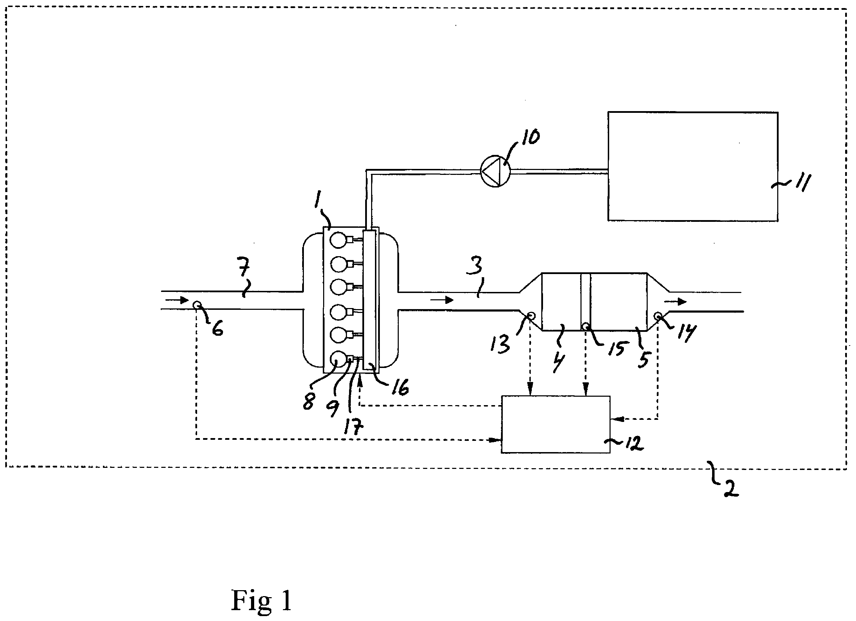

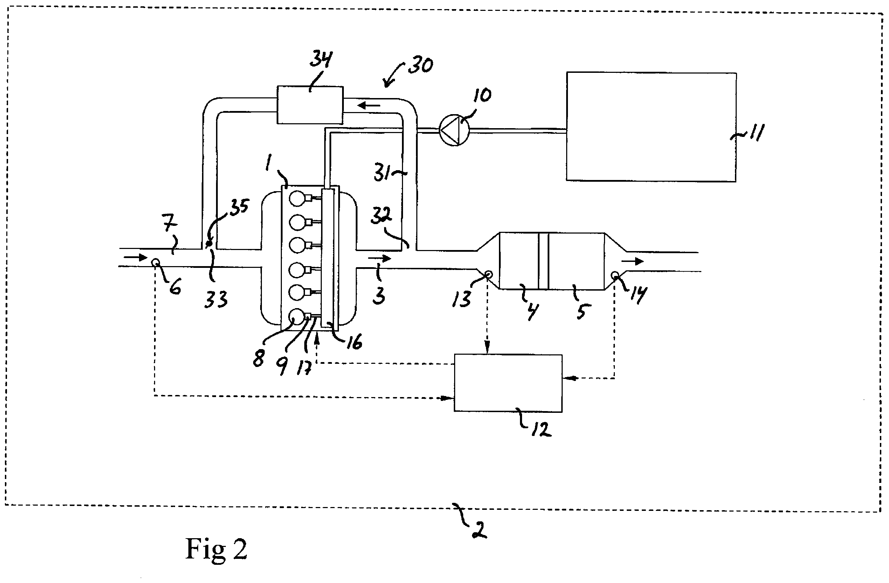

Figs. 1 and 2 depict schematically a combustion engine 1 of a motor vehicle 2. The exhaust gases produced by the engine 1 move through an exhaust line 3 and emerge into the surroundings via an exhaust outlet. In the exhaust line 3, a fuel oxidation device 4 and a particle filter 5 are disposed in series with one another, with the particle filter situated downstream of the fuel oxidation device. A mass flow sensor 6 is provided in the air intake 7 to the engine to measure the mass flow of the air which flows through the intake 7 and thence into the engine's cylinders 8. Figs. 1 and 2 illustrate schematically an engine 1 with six cylinders, but the engine may comprise any appropriate number of cylinders. Each cylinder 8 of the engine is allocated a specific injector 9 by means of which fuel is injected into the cylinder. A pump 10 is provided to supply fuel at high pressure to the injectors 9 from a fuel tank 11. A fuel rail 16, a so-called common rail, in the form of an accumulator for accumulation of high-pressure fuel which is to be supplied to the injectors 9, is provided in a conventional way between the pump 10 and the injectors. The pump 10 thus supplies high-pressure fuel to the fuel rail 16, in which the high-pressure fuel accumulates before it is supplied to the injectors 9. Each injector 9 is connected to the fuel rail 16 via a fuel line 17 in order to receive via this fuel line high-pressure fuel which has accumulated in the fuel rail 16. An electronic control unit 12, a so-called engine control unit, determines a set-point for the amount of fuel which is to be injected by the injectors 9 during each power stroke according to the vehicle's prevailing operating conditions, and regulates the opening times for each injector 9, i.e. the duration of the periods of time during which the injector is kept open to inject fuel into the respective cylinder 8 for the purposes of the respective power stroke, according to said set-point determined. This set-point value is controlled inter alia according to the prevailing mass flow of air in the air intake 7, and the control unit 12 is connected to the mass flow sensor 6 in order to receive from it measured values concerning this mass flow of air.

In the embodiments illustrated in Figs. 1 and 2 and described below, the fuel oxidation device 4 takes the form of an oxidation catalyst. The fuel oxidation device 4 might alternatively take the form of a set of two or more oxidation catalysts connected in series and/or in parallel, or one or more fuel-oxidising units of some other type.

In the exhaust line 3 downstream of the particle filter 5 or upstream of the oxidation catalyst 4, a reduction catalyst, e.g. of SCR (selective catalytic reduction) type, may be provided to effect catalytic conversion of environmentally harmful constituents of the exhaust gases to environmentally less harmful substances.

In the example illustrated in Fig. 2, the vehicle 2 is provided with an EGR (exhaust gas recirculation) system 30 for returning part of the engine's exhaust gases from the exhaust line 3 to the air intake 7. The EGR system comprises a return line 31 with an inlet 32 situated in the exhaust line 3 upstream of the oxidation catalyst 4, and an outlet 33 situated in the air intake 7 downstream of the mass flow sensor 6. One or more EGR coolers 34 are provided in the return line 31 to cool the returned exhaust gases. The amount of exhaust gases returned is regulated by means of an EGR valve 35.

In the examples illustrated in Figs. 1 and 2, a first temperature sensor 13 is provided to measure the temperature of the exhaust gases upstream of the oxidation catalyst 4, and a second temperature sensor 14 is provided to measure the temperature of the exhaust gases downstream of the particle filter 5. In the example illustrated in Fig. 1, a third temperature sensor 15 is also provided to measure the temperature of the exhaust gases between the oxidation catalyst 4 and the particle filter 5. The control unit 12 is connected to said temperature sensors 13, 14, 15 in order to receive from them measured values concerning the prevailing exhaust temperature at the respective measuring points.

When fuel injection adaptation is to be effected with respect to an injector 9, the injector is caused, during a succession of power strokes, to inject fuel into the relating cylinder 8 in the form of late injections which take place so late during the respective power strokes that the fuel thus injected late undergoes no combustion in the cylinder 8, and hence this unburnt fuel will pass out from the cylinder 8 and accompany the exhaust gases produced by the engine 1 to the oxidation catalyst 4 in order to be oxidised therein and thereby generate an increase in the temperature of the exhaust gases passing through the oxidation catalyst. The late fuel injections during this succession of power strokes take place with no change in the constant opening time $t_{open}$ of the injector 9. During this succession of power strokes, the other injectors are caused to inject fuel into the respective cylinders for conventional combustion and powering of the engine 1. The amount of fuel which in normal conditions would have been injected by the first-mentioned injector 9 for combustion in the respective cylinder 8 is with advantage distributed to the other injectors, preferably equally between them, during the current succession of power strokes, so that the work which in normal conditions would have been extracted from the engine is still extracted, while at the same time the first-mentioned injector 9 and its cylinder 8 are freed for the respective adaptation. This means that the adaptation can be effected during operation with no substantial impact on the engine's ordinary functions.

The control unit 12 determines a temperature increase value $\Delta T_{BDOC-ADOC}$ which represents the increase in temperature undergone by the exhaust gases during their passage through the oxidation catalyst 4 as a result of the fuel which accompanies them into, and is oxidised in, the oxidation catalyst. This temperature increase value $\Delta T_{BDOC-ADOC}$ is thus the difference between the temperature $T_{ADOC}$ of the exhaust gases immediately after the oxidation catalyst 4 and the temperature $T_{BDOC}$ of the exhaust gases before the oxidation catalyst, i.e. $\Delta T_{BDOC-ADOC} = T_{ADOC} - T_{BDOC}$. According to a first alternative, the control unit 12 is arranged to determine the temperature increase value $\Delta T_{BDOC-ADOC}$ on the basis of measured values from the aforesaid first and third temperature sensors 13, 15. According to a second alternative, the control unit 12 is arranged to determine the temperature increase value $\Delta T_{BDOC-ADOC}$ on the basis of measured values from the aforesaid first and the second temperature sensors 13, 14. In this latter case, the control unit 12 is arranged to calculate the temperature $T_{ADOC}$ of the exhaust gases at the outlet from the oxidation catalyst 4, in a manner well-known to specialists within the field, on the basis of the temperature of the exhaust gases downstream of the particle filter 5, i.e. on the basis of measured values from said second temperature sensor 14, and thereafter to compare the temperature thus calculated with that measured by the first temperature sensor 13, in order to determine the temperature increase value $\Delta T_{BDOC-ADOC}$.

On the basis of relationships well-known to specialists within the field (see below) between the aforesaid increase in the temperature of the exhaust gases and the mass flows of air and fuel, the control unit 12 is arranged to determine a calculation value $\dot{m}_{fuel1}$ which rep-

resents the mass flow of said unburnt injected fuel which accompanies the exhaust gases. When this calculation value $\dot{m}_{fuel1}$ is determined, the control unit 12 has knowledge of the fuel mass flow resulting from said late injections and the opening time $t_{open}$ applied to the injector 9 for its late injections. The control unit 12 is arranged to use using said calculation value $\dot{m}_{fuel1}$ and the value of said opening time $t_{open}$ as a basis for determining a relationship between the injector's opening time and the amount of fuel injected by it. The amount of fuel injected by the injector 9 may be expressed as a value of the mass flow of fuel achieved with the injector's current opening time $t_{open}$ during a succession of power strokes. The amount of fuel injected by it may alternatively be expressed as a value of the amount of fuel injected during an individual power stroke with the injector's current opening time $t_{open}$. Since it controls the injector 9, the control unit 12 has access to information about the frequency of said late injections and may use this information, said calculation value $\dot{m}_{fuel1}$ and the value of said opening time $t_{open}$ to determine a value of the amount of fuel injected during an individual power stroke with the injector's current opening time $t_{open}$.

The relationship determined between the injector's opening time and the amount of fuel injected by it can then be used for fuel injection adaptation in a manner well-known to specialists. The adaptation is done by adjustment of the reference table or computer model used for determining set-point values for the injector's opening time so that the actual amounts of fuel resulting from the opening time set-point values determined by means of the reference table or the computer model correspond better to the desired and expected amounts of fuel.

There is a given relationship between the aforesaid increase in the temperature of the exhaust gases, the mass flow of the unburnt injected fuel which accompanies them to the oxidation catalyst 4, and the mass flow of the exhaust gases passing through the oxidation catalyst. This latter mass flow represents the aggregate of the mass flow of air in the air intake 7, the mass flow of the unburnt injected fuel which accompanies the exhaust gases to the oxidation catalyst 4, and the mass flow of the fuel injected via the injectors and burnt in the engine's cylinders. From these relationships it is possible to resolve the mass flow of the unburnt injected fuel which accompanies the exhaust gases.

In determining said calculation value $\dot{m}_{fuel1}$ which represents the mass flow of said unburnt injected fuel which accompanies the exhaust gases, the control unit 12 uses said temperature increase value $\Delta T_{BDOC-ADOC}$, a fuel mass flow value $\dot{m}_{fuel2}$ representing the mass flow of the fuel injected via the injectors 9 and burnt in the engine's cylinders 8, and an air mass flow $\dot{m}_{air}$ which represents the prevailing mass flow of air in the engine's air intake 7. Since it controls the injection of the fuel which is to be burnt in the engine's cylinders, the control unit 12 has access to the information needed for determining said fuel mass flow value $\dot{m}_{fuel2}$. The air

mass flow value $\dot{m}_{air}$ is determined on the basis of information from the mass flow sensor 6.

In steady-state conditions when the temperature increase value $\Delta T_{BDOC-ADOC}$ has assumed a substantially steady value, said calculation value $\dot{m}_{fuel1}$ may be determined by means of the formula

$$\dot{m}_{fuel1} = \frac{\dot{m}_{air} + \dot{m}_{fuel2}}{\left( \dfrac{h_{Comb} \cdot \eta_{DOC}}{\Delta T_{BDOC-ADOC} \cdot Cp_{exh}} - 1 \right)}$$

in which

- $h_{Comb}$ is the calorific value of the unburnt fuel which accompanies the exhaust gases,
- $\eta_{DOC}$ is the efficiency of the oxidation catalyst 4 with respect to oxidation of the unburnt fuel which accompanies the exhaust gases, and
- $Cp_{exh}$ is the thermal capacity of the exhaust gases passing through the oxidation catalyst 4.

The calorific value $h_{Comb}$ depends on which fuel is used and is therefore predetermined.

The efficiency $\eta_{DOC}$ of the oxidation catalyst 4 with respect to fuel oxidation depends on the age of the oxidation catalyst, the temperature $T_{BDOC}$ of the exhaust gases before the oxidation catalyst, the temperature $T_{ADOC}$ of the exhaust gases immediately after the oxidation catalyst, and the exhaust mass flow. Values of the efficiency $\eta_{DOC}$ for different combinations of these variables may be determined beforehand and be stored in a memory in the form of charted values. As mentioned above, the exhaust mass flow represents the aggregate of the mass flow of air in the air intake 7, the mass flow of the unburnt injected fuel which accompanies the exhaust gases to the oxidation catalyst 4, and the mass flow of the fuel injected via the injectors 9 and burnt in the engine's cylinders 8. The fuel mass flows are known to the control unit 12 and a value of the mass flow of air in the air intake 7 is obtained from the mass flow sensor 6.

The thermal capacity $Cp_{exh}$ of the exhaust gases passing through the oxidation catalyst 4 depends on their composition, which itself depends on the mass flow of air in the air intake 7, the mass flow of the unburnt injected fuel which accompanies the exhaust gases to the oxidation catalyst 4, and the mass flow of the fuel injected via the injectors 9 and burnt in the engine's cylinders 8. The fuel mass flows are known to the control unit 12 and a value of the mass flow of air in the air intake 7 is obtained from the mass flow sensor 6.

The aforesaid thermal capacity $Cp_{exh}$ has a certain temperature dependency and its value is therefore affected by the temperature of the exhaust gases. Since the temperature of the exhaust gases changes during their passage through the oxidation catalyst 4, the value used for the thermal capacity $Cp_{exh}$ in the above formula may with advantage be the mean value, or a mean value weighted in a manner known to specialists, for the thermal capacity of the exhaust gases across the relevant temperature range between $T_{BDOC}$ and $T_{ADOC}$.

If the particle filter 5 downstream of the oxidation catalyst 4 is coated with catalytic material, there is an alternative way of determining the efficiency $\eta_{DOC}$, of the oxidation catalyst 4 with respect to fuel oxidation. In this case the control unit 12 may be arranged to calculate the current efficiency $\eta_{DOC}$ in a manner well-known to specialists within the field, on the basis of the temperature increase undergone by the exhaust gases during their passage through the particle filter 5, i.e. on the basis of the difference between their temperature measured by the second temperature sensor 14 downstream of the particle filter and their temperature measured by the third temperature sensor 15 upstream of the particle filter.

In non-steady-state conditions, i.e. when the temperature increase value $\Delta T_{BDOC-ADOC}$ has not assumed a steady value, it is possible to apply a calculation process substantially corresponding to that described above for steady-state conditions. In this case, however, it is necessary to compensate for the heat transfer between the exhaust gases and the oxidation catalyst 4. The simplest way to do this is by ensuring that measurements and mean value formation take place over a time which is markedly longer than the time by which the temperature of the exhaust gases and the temperature of the oxidation catalyst 4 vary. Another alternative is to supplement the above formula as follows:

$$\dot{m}_{fuel1} = \frac{\dot{m}_{air} + \dot{m}_{fuel2} + \dfrac{k_{exh-DOC} \cdot \Delta T_{exh-DOC}}{\Delta T_{BDOC-ADOC} \cdot Cp_{exh}}}{\left(\dfrac{h_{Comb} \cdot \eta_{DOC}}{\Delta T_{BDOC-ADOC} \cdot Cp_{exh}} - 1\right)}$$

in which

- $k_{exh-DOC}$ is the heat transfer coefficient for the heat transfer from the exhaust gases to the oxidation catalyst 4, and
- $\Delta T_{exh-DOC}$ is the difference between

  • the mean value, or a mean value weighted in a manner known to specialists, of the exhaust temperature $T_{BDOC}$ before and the exhaust temperature $T_{ADOC}$ immediately after the oxidation catalyst 4, and
  • the temperature $T_{DOC}$ of the oxidation catalyst 4.

To be able to determine $\Delta T_{exh-DOC}$, it is necessary for the temperature $T_{DOC}$ of the oxidation catalyst 4 to be calculated either iteratively or sequentially. The heat transfer coefficient $k_{exh-DOC}$ depends on the relevant cross-sectional area for the heat transfer from the exhaust gases to the oxidation catalyst 4 and is therefore area-dependent in the examples illustrated here.

The method described above for determining a relationship between the opening time for an injector 9 and the amount of fuel injected by it may be applied by means of the electronic control unit 12 which serves as the engine control unit for the engine 1, as illustrated in Figs. 1 and 2. The method might nevertheless be applied alternatively by means of another electronic control unit which communicates with the engine control unit.

If the fuel oxidation device comprises two or more fuel-oxidising units connected in series, e.g. two or more oxidation catalysts connected in series, the aforesaid temperature increase value $\Delta T_{BDOC\_ADOC}$ represents the difference between the temperature $T_{ADOC}$ of the exhaust gases immediately after whichever of the fuel oxidising units is situated furthest downstream in the exhaust line 3 and the temperature $T_{BDOC}$ of the exhaust gases before whichever of the fuel-oxidising units is situated furthest upstream in the exhaust line 3. If the fuel oxidation device comprises two or more fuel-oxidising units connected in parallel, e.g. two or more oxidation catalysts connected in parallel, the temperature increase value $\Delta T_{BDOC\_ADOC}$ represents the difference between the temperature $T_{ADOC}$ of the exhaust gases immediately downstream of a point in the exhaust line 3 where the mutually parallel exhaust manifold flows unite and the temperature $T_{BDOC}$ of the exhaust gases before whichever of the fuel-oxidising units is situated furthest upstream in the exhaust line 3.

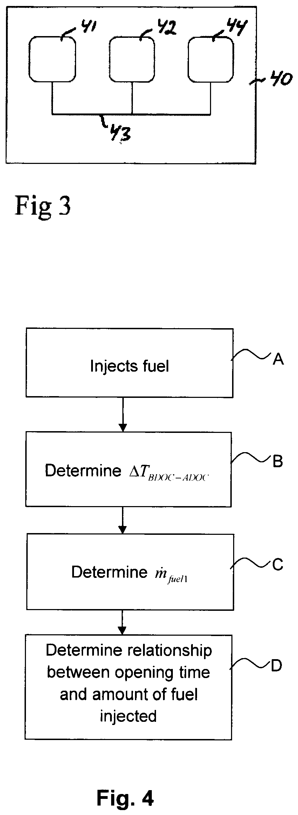

Fig. 4 is a flowchart illustrating a method according to the present invention for determining a relationship between the opening time for an injector 9 of a cylinder 8 in a combustion engine 1 and the amount of fuel injected by the injector 9.

As a first step A, during a succession of power strokes in which the same opening time $t_{open}$ is applied to the injector 9 for each of them, the injector 9 is caused to inject fuel into the cylinder 8 in the form of late injections which take place so late during the respective power strokes that the fuel thus injected late undergoes no combustion in the cylinder 8, and this unburnt fuel is caused to accompany the exhaust gases produced by the engine 1 to a fuel oxidation device 4 situated in an exhaust line 3 from the engine, in order to be oxidised in the fuel oxidation device and thereby generate an increase in the temperature of the exhaust gases passing through the fuel oxidation device.

As a second step B, a temperature increase value $\Delta T_{BDOC-ADOC}$ which represents the increase in the temperature of the exhaust gases during their passage through the fuel oxidation device 4 is determined on the basis of measured values from a temperature sensor provided to detect the temperature of the exhaust gases upstream of the fuel oxidation device and another temperature sensor provided to detect the temperature of the exhaust gases downstream of the fuel oxidation device.

As a third step C, a calculation value $\dot{m}_{fuel1}$ which

represents the mass flow of said unburnt injected fuel which accompanies the exhaust gases is determined on the basis of said temperature increase value $\Delta T_{BDOC\text{-}ADOC}$, a fuel mass flow value $\dot{m}_{fuel2}$ representing the mass flow of fuel injected into and burnt in the engine 1, and an air mass flow value $\dot{m}_{air}$ representing the prevailing mass flow of air in the engine's air intake 7.

As a fourth step D, on the basis of said calculation value $\dot{m}_{fuel1}$ and the value of the opening time $t_{open}$ applied to the injector 9 for said late injections, a relationship is determined between the opening time of the injector 9 and the amount of fuel injected by it.

To determine a relationship between the opening time of an injector and the amount of fuel injected by the injector 9 for various different values of said opening time $t_{open}$, said steps A-D are performed several times with respect to one and the same injector, using a different value for the opening time $t_{open}$ each time. This makes it possible to determine amounts of fuel injected as a function of the opening time.

When the injectors 9 are connected to a fuel rail 16, said steps A-D are with advantage performed several times with respect to one and the same injector, using different values each time for the fuel pressure in the fuel rail 16. This makes it possible to determine also how the amount of fuel injected by the injector depends on the fuel pressure in the fuel rail 16.

Computer program code for implementing a method according to the invention is with advantage incorporated in a computer program which can be read into the internal memory of a computer, e.g. the internal memory of an electronic control unit of a motor vehicle. Such a computer program is with advantage provided via a computer program product comprising a data storage medium which can be read by an electronic control unit and which has the computer program stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer program according to an embodiment of the invention comprises computer program code for causing an electronic control unit:

- to cause an injector of a cylinder in a combustion engine, during a succession of power strokes in which the same opening time $t_{open}$ is applied to the injector for each of them, to inject fuel into the cylinder in the form of late injections which take place so late during the respective power strokes that the fuel thus injected late undergoes no combustion in the cylinder and this unburnt fuel is caused to accompany the exhaust gases produced by the engine to a fuel oxidation device situated in an exhaust line from the engine, in order to be oxidised in the fuel oxidation device and thereby generate an increase in the temperature of the exhaust gases passing through the fuel oxidation device,

- to determine a temperature increase value $\Delta T_{BDOC\text{-}ADOC}$ which represents the increase in the temperature of the exhaust gases during their passage through the fuel oxidation device on the basis of measured values from a temperature sensor provided to detect the temperature of the exhaust gases upstream of the fuel oxidation device, and from another temperature sensor provided to detect the temperature of the exhaust gases downstream of the fuel oxidation device,

- to determine a calculation value $\dot{m}_{fuel1}$ which represents the mass flow of said unburnt injected fuel which accompanies the exhaust gases, on the basis of said temperature increase value $\Delta T_{BDOC\text{-}ADOC}$, a fuel mass flow value $\dot{m}_{fuel2}$ representing the mass flow of fuel injected into and burnt in the engine and an air mass flow value $\dot{m}_{air}$ representing the prevailing mass flow of air in the engine's air intake, and

- to determine a relationship between the injector's opening time and the amount of fuel injected by it, on the basis of said calculation value $\dot{m}_{fuel1}$ and the value of the opening time $t_{open}$ applied to the injector for said late injections.

Fig. 3 illustrates very schematically an electronic control unit 40 comprising an execution means 41, e.g. a central processor unit (CPU), for execution of computer software. The execution means 41 communicates with a memory 42, e.g. of the RAM type, via a data bus 43. The control unit 40 comprises also a data storage medium 44, e.g. in the form of a flash memory or a memory of the ROM, PROM, EPROM or EEPROM type. The execution means 41 communicates with the data storage medium 44 via the data bus 43. A computer program comprising computer program code for implementing a method according to the invention, e.g. in accordance with the embodiment illustrated in Fig. 4, is stored on the data storage medium 44.

## Claims

1. A method for determining a relationship between the opening time for an injector (9) of a cylinder (8) in a combustion engine (1) and the amount of fuel injected by the injector (9), **characterised in that** the method comprises the following steps:

    A) during a succession of power strokes in which the same opening time ($t_{open}$) is applied to the injector (9) for each of them, the injector is caused to inject fuel into the cylinder (8) in the form of late injections which take place so late during the respective power strokes that the fuel thus injected late undergoes no combustion in the cylinder (8) and this unburnt fuel is caused to accompany the exhaust gases produced by the engine (1) to a fuel oxidation device (4) situated in an exhaust line (3) from the engine, in order to be oxidised in the fuel oxidation device and thereby generate an increase in the temperature of the exhaust gases passing through the fuel oxidation device,

B) a temperature increase value ($\Delta T_{BDOC\text{-}ADOC}$) which represents the temperature increase of the exhaust gases during their passage through the fuel oxidation device (4) is determined on the basis of measured values from a temperature sensor (13) provided to detect the temperature of the exhaust gases upstream of the fuel oxidation device (4), and from another temperature sensor (14; 15) provided to detect the temperature of the exhaust gases downstream of the fuel oxidation device,

C) a calculation value ($\dot{m}_{fuel1}$) which represents the mass flow of said unburnt injected fuel which accompanies the exhaust gases is determined on the basis of said temperature increase value ($\Delta T_{BDOC\text{-}ADOC}$), a fuel mass flow value ($\dot{m}_{fuel2}$) representing the mass flow of fuel injected into and burnt in the engine (1) and an air mass flow value ($\dot{m}_{air}$) representing the prevailing mass flow of air in the engine's air intake (7), and

D) a relationship between the injector's opening time and the amount of fuel injected by the injector (9) is determined on the basis of said calculation value ($\dot{m}_{fuel1}$) and the value of the opening time ($t_{open}$) applied to the injector (9) for said late injections.

2. A method according to claim 1, **characterised in that** said fuel mass flow value ($\dot{m}_{fuel1}$) is determined by means of the following formula after the temperature increase value ($\Delta T_{BDOC\text{-}ADOC}$) has assumed a substantially steady value:

$$\dot{m}_{fuel1} = \frac{\dot{m}_{air} + \dot{m}_{fuel2}}{\left(\dfrac{h_{Comb} \cdot \eta_{DOC}}{\Delta T_{BDOC-ADOC} \cdot Cp_{exh}} - 1\right)}$$

in which

- $\dot{m}_{fuel1}$ is said calculation value,
- $\dot{m}_{fuel2}$ is said fuel mass flow value,
- $\dot{m}_{air}$ is the air mass flow value,
- $\Delta T_{BDOC\text{-}ADOC}$ is the temperature increase value,
- $h_{Comb}$ is the calorific value of the unburnt fuel which accompanies the exhaust gases,
- $\eta_{DOC}$ is the efficiency of the fuel oxidation device with respect to oxidation of the unburnt fuel which accompanies the exhaust gases, and

- $Cp_{exh}$ is the thermal capacity of the exhaust gases.

3. A method according to claim 1 or 2, **characterised in that** the fuel oxidation device (4) takes the form of an oxidation catalyst.

4. A method according to claim 1 or 2, **characterised in that** the fuel oxidation device (4) takes the form of a set of two or more oxidation catalysts connected in series and/or in parallel.

5. A method according to any one of claims 1-4, **characterised in that** said steps A-D are performed several times, using each time a different value for said opening time ($t_{open}$).

6. A method according to any one of claims 1-5, in which the injector (9) is connected to a fuel rail (16) of a common rail fuel injection system, **characterised in that** said steps A-D are performed several times, using each time a different value for the fuel pressure in the fuel rail (16).

7. A computer program product, comprising a data storage medium which can be read by an electronic control unit, and which data storage medium has a computer program code stored thereon, said computer program code being arranged for causing an electronic control unit:

- to cause an injector of a cylinder in a combustion engine, during a succession of power strokes in which the same opening time ($t_{open}$) is applied to the injector for each of them, to inject fuel into the cylinder in the form of late injections which take place so late during the respective power strokes that the fuel thus injected late undergoes no combustion in the cylinder and this unburnt fuel is caused to accompany the exhaust gases produced by the engine to a fuel oxidation device situated in an exhaust line from the engine, in order to be oxidised in the fuel oxidation device and thereby generate an increase in the temperature of the exhaust gases passing through the fuel oxidation device,

- to determine a temperature increase value ($\Delta T_{BDOC\text{-}ADOC}$) which represents the increase in the temperature of the exhaust gases during their passage through the fuel oxidation device on the basis of measured values from a temperature sensor (13) provided to detect the temperature of the exhaust gases upstream of the fuel oxidation device (4), and from another temperature sensor (14; 15) provided to detect the temperature of the exhaust gases downstream of the fuel oxidation device,

- to determine a calculation value ($\dot{m}_{fuel1}$) which

represents the mass flow of said unburnt injected fuel which accompanies the exhaust gases on the basis of said temperature increase value ($\Delta_{TBDOC\text{-}ADOC}$), a fuel mass flow value ($\dot{m}_{fuel2}$) representing the mass flow of fuel injected into and burnt in the engine and an air mass flow value ($\dot{m}_{air}$) representing the prevailing mass flow of air in the engine's air intake, and

- to determine a relationship between the injector's opening time and the amount of fuel injected by it on the basis of said calculation value ($\dot{m}_{fuel1}$) and the value of the opening time ($t_{open}$)applied to the injector for said late injections.

**8.** An electronic control unit for a motor vehicle, comprising an execution means (41), a memory (42) connected to the execution means and a data storage medium (44) which is connected to the execution means and which has a computer program code stored thereon, said computer program code being arranged for causing the electronic control unit:

- to cause an injector of a cylinder in a combustion engine, during a succession of power strokes in which the same opening time ($t_{open}$) is applied to the injector for each of them, to inject fuel into the cylinder in the form of late injections which take place so late during the respective power strokes that the fuel thus injected late undergoes no combustion in the cylinder and this unburnt fuel is caused to accompany the exhaust gases produced by the engine to a fuel oxidation device situated in an exhaust line from the engine, in order to be oxidised in the fuel oxidation device and thereby generate an increase in the temperature of the exhaust gases passing through the fuel oxidation device,

- to determine a temperature increase value ($\Delta T_{BDOC\text{-}ADOC}$) which represents the increase in the temperature of the exhaust gases during their passage through the fuel oxidation device on the basis of measured values from a temperature sensor (13) provided to detect the temperature of the exhaust gases upstream of the fuel oxidation device (4), and from another temperature sensor (14; 15) provided to detect the temperature of the exhaust gases downstream of the fuel oxidation device,

- to determine a calculation value ($\dot{m}_{fuel1}$) which represents the mass flow of said unburnt injected fuel which accompanies the exhaust gases on the basis of said temperature increase value ($\Delta T_{BDOC\text{-}ADOC}$), a fuel mass flow value ($\dot{m}_{fuel2}$) representing the mass flow of fuel injected into and burnt in the engine and an air mass flow value ($\dot{m}_{air}$) representing the prevailing mass flow of air in the engine's air intake, and

- to determine a relationship between the injector's opening time and the amount of fuel injected by it on the basis of said calculation value ($\dot{m}_{fuel2}$) and the value of the opening time ($t_{open}$) applied to the injector for said late injections.

**Patentansprüche**

**1.** Verfahren zur Bestimmung einer Beziehung zwischen einer Öffnungszeit für eine Einspritzdüse (9) eines Zylinders (8) in einem Verbrennungsmotor (1) und einer Menge an von der Einspritzdüse (9) eingespritztem Kraftstoff, **dadurch gekennzeichnet, dass** das Verfahren die folgenden Verfahrensschritte umfasst:

A) während einer Abfolge von Arbeitstakten, in welchen für jeden der Arbeitstakte dieselbe Öffnungszeit ($t_{open}$) auf die Einspritzdüse (9) angewendet wird, wird die Einspritzdüse (9) dazu veranlasst, Kraftstoff in den Zylinder (8) in Form von verspäteten Einspritzungen einzuspritzen, die so spät während der entsprechenden Arbeitstakte stattfinden, dass der derart verspätet eingespritzte Kraftstoff in dem Zylinder keiner Verbrennung unterliegt und dieser unverbrannte Kraftstoff dazu veranlasst wird, die von dem Verbrennungsmotor (1) erzeugten Abgase zu einer Kraftstoffoxidationsvorrichtung (4) zu begleiten, welche in einer Abgasleitung (3) des Verbrennungsmotors angeordnet ist, um in der Kraftstoffoxidationsvorrichtung oxidiert zu werden und dadurch eine Erhöhung der Temperatur der Abgase, welche die Kraftstoffoxidationsvorrichtung durchlaufen, zu erzeugen,

B) ein Temperaturerhöhungswert ($\Delta T_{BDOC\text{-}ADOC}$), der die Temperaturerhöhung der Abgase während ihres Durchgangs durch die Kraftstoffoxidationsvorrichtung (4) repräsentiert, wird anhand von Messwerten eines Temperatursensors (13), der dazu vorgesehen ist, die Temperatur der Abgase zuströmungsseitig bezüglich der Kraftstoffoxidationsvorrichtung (4) zu erfassen, und anhand eines anderen Temperatursensors (14; 15), der dazu vorgesehen ist, die Temperatur der Abgase abströmungsseitig bezüglich der Kraftstoffoxidationsvorrichtung (4) zu erfassen, ermittelt,

C) ein Berechnungswert ($\dot{m}_{fuel1}$), der einen Massenfluss des unverbrannten eingespritzten Kraftstoffs, welcher die Abgase begleitet, repräsentiert, wird anhand des Temperaturerhöhungswerts ($\Delta T_{BDOC\text{-}ADOC}$), eines Kraftstoffmassenflusswerts ($\dot{m}_{fuel2}$), der einen Massenfluss von in den Verbrennungsmotor (1) eingespritztem und in diesem verbrannten Kraftstoff repräsentiert, und eines Luftmassenflusswerts ($\dot{m}_{air}$), der einen vorliegenden Massenfluss von Luft in dem Lufteinlass (7) des Verbrennungsmotors repräsentiert, ermittelt und

D) eine Beziehung zwischen der Öffnungzeit der Einspritzdüse und der Menge des von der Einspritzdüse (9) eingespritzten Kraftstoffs wird anhand des Berechnungswerts ($\dot{m}_{fuel1}$) und des Werts der auf die Einspritzdüse (9) für verspätete Einspritzung angewendeten Öffnungzeit ($t_{open}$) ermittelt.

2.  Verfahren nach Anspruch 1, **dadurch gekennzeichnet, dass** der Kraftstoffmassenflusswert ($\dot{m}_{fuel2}$) anhand der folgenden Formel ermittelt wird, nachdem der Temperaturerhöhungswert ($\Delta T_{BDOC\text{-}ADOC}$) einen zumindest im Wesentlichen stabilen Wert angenommen hat:

$$\dot{m}_{fuel1} = \frac{\dot{m}_{air} + \dot{m}_{fuel2}}{\left(\frac{h_{Comb} \cdot \eta_{DOC}}{\Delta T_{BDOC-ADOC} \cdot Cp_{exh}} - 1\right)}$$

wobei

- $\dot{m}_{fuel1}$ Berechnungswert ist,
- $\dot{m}_{fuel2}$ Kraftstoffmassenflusswert ist,
- $\dot{m}_{air}$ der Luftmassenflusswert ist,
- $\Delta T_{BDOC\text{-}ADOC}$ der Temperaturerhöhungswert ist,
- $h_{Comb}$ der kalorische Wert des unverbrannten Kraftstoffs, welcher die Abgase begleitet, ist,
- $\eta_{DOC}$ der Wirkungsgrad der Kraftstoffoxidationsvorrichtung bezüglich der Oxidation des unverbrannten Kraftstoffs, welcher die Abgase begleitet, ist und
- $Cp_{exh}$ die Wärmekapazität der Abgase ist.

3.  Verfahren nach Anspruch 1 oder 2, **dadurch gekennzeichnet, dass** die Kraftstoffoxidationsvorrichtung (4) die Gestalt eines Oxidationskatalysators annimmt.

4.  Verfahren nach Anspruch 1 oder 2, **dadurch gekennzeichnet, dass** die Kraftstoffoxidationsvorrichtung (4) die Gestalt eines Satzes von zwei oder mehr Oxidationskatalysatoren annimmt, die in Serie und/oder parallel zueinander miteinander verbunden sind.

5.  Verfahren nach einem der Ansprüche 1 bis 4, **dadurch gekennzeichnet, dass** Verfahrensschritte A-D mehrmals durchgeführt werden, wobei jedes Mal ein anderer Wert für die Öffnungzeit ($t_{open}$) verwendet wird.

6.  Verfahren nach einem der Ansprüche 1 bis 5, wobei die Einspritzdüse (9) mit einem Kraftstoffrohr (16) eines Common-Rail-Kraftstoffeinspritzsystems verbunden ist, **dadurch gekennzeichnet, dass** die Verfahrensschritte A-D mehrmals durchgeführt werden, wobei jedes Mal ein anderer Wert für den Kraftstoffdruck in dem Kraftstoffrohr (16) verwendet wird.

7.  Computerprogrammprodukt, das ein Datenspeichermedium aufweist, welches von einer elektronischen Steuereinheit gelesen werden kann, und welches einen auf dem Datenspeichermedium gespeicherten Computerprogrammcode aufweist, wobei der Computerprogrammcode dazu eingerichtet ist, eine elektronische Steuereinheit dazu zu veranlassen:

    - eine Einspritzdüse eines Zylinders eines Verbrennungsmotors dazu zu veranlassen, während einer Abfolge von Arbeitstakten, in welchen für jeden der Arbeitstake dieselbe Öffnungzeit ($t_{open}$) auf die Einspritzdüse angewendet wird, wird die Einspritzdüse dazu gebracht, Kraftstoff in den Zylinder einzuspritzen in Form von verspäteten Einspritzungen, die so spät während der entsprechenden Arbeitstakte stattfinden, dass der derart verspätet eingespritzte Kraftstoff in dem Zylinder keiner Verbrennung unterliegt und dieser unverbrannte Kraftstoff dazu veranlasst wird, die von dem Verbrennungsmotor erzeugten Abgase zu einer Kraftstoffoxidationsvorrichtung zu begleiten, welche in einer Abgasleitung des Verbrennungsmotors angeordnet ist, um in der Kraftstoffoxidationsvorrichtung oxidiert zu werden und dadurch eine Erhöhung der Temperatur der Abgase, welche die Kraftstoffoxidationsvorrichtung durchlaufen, zu erzeugen
    - einen Temperaturerhöhungswert ($\Delta T_{BDOC\text{-}ADOC}$), der die Temperaturerhöhung der Abgase während ihres Durchgangs durch die Kraftstoffoxidationsvorrichtung (4) repräsentiert, anhand von Messwerten eines Temperatursensors (13), der dazu vorgesehen ist, die Temperatur der Abgase zuströmungsseitig bezüglich der Kraftstoffoxidationsvorrichtung (4) zu erfassen, und anhand eines anderen Temperatursensors (14; 15), der dazu vorgesehen ist, die Temperatur der Abgase abströmungsseitig bezüglich der Kraftstoffoxidationsvorrichtung (4) zu erfassen, zu ermitteln,
    - einen Berechnungswert ($\dot{m}_{fuel1}$), der einen Massenfluss des unverbrannten eingespritzten Kraftstoffs, welcher die Abgase begleitet, repräsentiert, anhand des besagten Temperaturerhöhungswerts ($\Delta T_{BDOC\text{-}ADOC}$), eines Kraftstoffmassenflusswerts ($\dot{m}_{fuel2}$), der einen Massenfluss von in den Verbrennungsmotor eingespritztem und in diesem verbrannten Kraftstoff repräsentiert, und eines Luftmassenflusswerts ($\dot{m}_{air}$), der einen vorliegenden Massenfluss von Luft in dem Lufteinlass des Verbrennungsmotors repräsentiert, zu ermitteln und

- eine Beziehung zwischen der Öffnungszeit der Einspritzdüse und der Menge des von der Einspritzdüse eingespritzten Kraftstoffs anhand des Berechnungswerts ($\dot{m}_{fuel1}$) und des Werts der auf die Einspritzdüse (9) für die verspätete Einspritzung angewendeten Öffnungszeit ($t_{open}$) zu ermitteln.

8. Elektronische Steuereinheit für ein Kraftfahrzeug, die ein Ausführungsmittel (41), einen mit dem Ausführungsmittel verbundenen Speicher (42) und ein Datenspeichermedium (44), welches mit dem Ausführungsmittel verbunden ist und welches einen auf dem Datenspeichermedium (44) gespeicherten Computerprogrammcode aufweist, wobei der Computerprogrammcode dazu eingerichtet ist, die elektronische Steuereinheit dazu zu veranlassen:

- eine Einspritzdüse eines Zylinders eines Verbrennungsmotors dazu zu veranlassen, während einer Abfolge von Arbeitstakten, in welchen für jeden der Arbeitstake dieselbe Öffnungszeit ($t_{open}$) auf die Einspritzdüse angewendet wird, wird die Einspritzdüse dazu gebracht, Kraftstoff in den Zylinder einzuspritzen in Form von verspäteten Einspritzungen, die so spät während der entsprechenden Arbeitstakte stattfinden, dass der derart verspätet eingespritzte Kraftstoff in dem Zylinder keiner Verbrennung unterliegt und dieser unverbrannte Kraftstoff dazu veranlasst wird, die von dem Verbrennungsmotor erzeugten Abgase zu einer Kraftstoffoxidationsvorrichtung zu begleiten, welche in einer Abgasleitung des Verbrennungsmotors angeordnet ist, um in der Kraftstoffoxidationsvorrichtung oxidiert zu werden und dadurch eine Erhöhung der Temperatur der Abgase, welche die Kraftstoffoxidationsvorrichtung durchlaufen, zu erzeugen
- einen Temperaturerhöhungswert ($\Delta T_{BDOC-ADOC}$), der die Temperaturerhöhung der Abgase während ihres Durchgangs durch die Kraftstoffoxidationsvorrichtung (4) repräsentiert, anhand von Messwerten eines Temperatursensors (13), der dazu vorgesehen ist, die Temperatur der Abgase zuströmungsseitig bezüglich der Kraftstoffoxidationsvorrichtung (4) zu erfassen, und anhand eines anderen Temperatursensors (14; 15), der dazu vorgesehen ist, die Temperatur der Abgase abströmungsseitig bezüglich der Kraftstoffoxidationsvorrichtung (4) zu erfassen, zu ermitteln,
- einen Berechnungswert ($\dot{m}_{fuel1}$), der einen Massenfluss des unverbrannten eingespritzten Kraftstoffs, welcher die Abgase begleitet, repräsentiert, anhand des Temperaturerhöhungswerts ($\Delta T_{BDOC-ADOC}$), eines Kraftstoffmassenflusswerts ($\dot{m}_{fuel2}$), der einen Massenfluss von in den Verbrennungsmotor eingespritztem und in diesem verbrannten Kraftstoff repräsentiert, und eines Luftmassenflusswerts ($\dot{m}_{air}$), der einen vorliegenden Massenfluss von Luft in dem Lufteinlass des Verbrennungsmotors repräsentiert, zu ermitteln und

- eine Beziehung zwischen der Öffnungszeit der Einspritzdüse und der Menge des von der Einspritzdüse eingespritzten Kraftstoffs anhand des Berechnungswerts ($\dot{m}_{fuel1}$) und des Werts der auf die Einspritzdüse (9) für die verspätete Einspritzung angewendeten Öffnungszeit ($t_{open}$) zu ermitteln.

**Revendications**

1. Procédé pour déterminer une relation entre le temps d'ouverture pour un injecteur (9) d'un cylindre (8) dans un moteur à combustion (1) et la quantité de carburant injecté par l'injecteur (9), **caractérisé en ce que** le procédé comprend les étapes suivantes :

A) durant une succession de courses de puissance dans lesquelles le même temps d'ouverture ($t_{open}$) est appliqué à l'injecteur (9) pour chacune d'entre elles, l'injecteur est amené à injecter du carburant dans le cylindre (8) sous la forme d'injections tardives qui se produisent si tard durant les courses de puissance respectives que le carburant ainsi injecté tardivement ne subit pas de combustion dans le cylindre (8) et que ce carburant non brûlé est amené à accompagner les gaz d'échappement produits par le moteur (1) vers un dispositif d'oxydation de carburant (4) situé dans une ligne d'échappement (3) à partir du moteur, afin d'être oxydé dans le dispositif d'oxydation de carburant, et de façon à générer ainsi une augmentation dans la température des gaz d'échappement traversant le dispositif d'oxydation de carburant,

B) une valeur d'augmentation de température ($\Delta T_{BDOC-ADOC}$) qui représente l'augmentation de température des gaz d'échappement durant leur passage à travers le dispositif d'oxydation de carburant (4) est déterminée en fonction de valeurs mesurées à partir d'un capteur de température (13) disposé de façon à détecter la température des gaz d'échappement en amont du dispositif d'oxydation de carburant (4), et à partir d'un autre capteur de température (14 ; 15) disposé de façon à détecter la température des gaz d'échappement en aval du dispositif d'oxydation de carburant,

C) une valeur de calcul ($\dot{m}_{fuel1}$) qui représente le débit d'écoulement massique dudit carburant injecté non brûlé qui accompagne les gaz d'échappement est déterminée en fonction de ladite valeur d'augmentation de température ($\Delta T_{BDOC\text{-}ADOC}$), d'une valeur de débit d'écoulement massique de carburant ($\dot{m}_{fuel2}$) représentant le débit d'écoulement massique de carburant injecté dans le moteur (1) et brûlé dans celui-ci et d'une valeur de débit d'écoulement massique d'air ($\dot{m}_{air}$) représentant le débit d'écoulement massique prévalent de l'air dans l'admission d'air (7) du moteur, et

D) une relation entre le temps d'ouverture de l'injecteur et la quantité de carburant injecté par l'injecteur (9) est déterminée en fonction de ladite valeur de calcul ($\dot{m}_{fuel1}$) et de la valeur du temps d'ouverture ($t_{open}$) appliqué à l'injecteur (9) pour lesdites injections tardives.

2. Procédé selon la revendication 1, **caractérisé en ce que** ladite valeur de débit d'écoulement massique de carburant ($\dot{m}_{fuel1}$) est déterminée à l'aide de la formule suivante après que la valeur d'augmentation de température ($\Delta T_{BDOC\text{-}ADOC}$) a pris une valeur sensiblement stable :

$$\dot{m}_{fuel1} = \frac{\dot{m}_{air} + \dot{m}_{fuel2}}{\left( \dfrac{h_{Comb} \cdot \eta_{DOC}}{\Delta T_{BDOC-ADOC} \cdot Cp_{exh}} - 1 \right)}$$

où :

- $\dot{m}_{fuel1}$ est ladite valeur de calcul,
- $\dot{m}_{fuel2}$ est ladite valeur de débit d'écoulement massique de carburant,
- $\dot{m}_{air}$ est la valeur de débit d'écoulement massique d'air,
- $\Delta T_{BDOC\text{-}ADOC}$ est la valeur d'augmentation de température,
- $h_{Comb}$ est la valeur calorifique du carburant non brûlé qui accompagne les gaz d'échappement,
- $\eta_{DOC}$ est le rendement du dispositif d'oxydation de carburant vis-à-vis de l'oxydation du carburant non brûlé qui accompagne les gaz d'échappement, et
- $Cp_{exh}$ est la capacité thermique des gaz d'échappement.

3. Procédé selon la revendication 1 ou 2, **caractérisé en ce que** le dispositif d'oxydation de carburant (4) prend la forme d'un catalyseur d'oxydation.

4. Procédé selon la revendication 1 ou 2, **caractérisé en ce que** le dispositif d'oxydation de carburant (4) prend la forme d'un jeu d'au moins deux catalyseurs d'oxydation reliés en série et/ou en parallèle.

5. Procédé selon l'une quelconque des revendications 1 à 4, **caractérisé en ce que** lesdites étapes A à D sont effectuées plusieurs fois, en utilisant à chaque fois une valeur différente pour ledit temps d'ouverture ($t_{open}$).

6. Procédé selon l'une quelconque des revendications 1 à 5, dans lequel l'injecteur (9) est relié à un rail de carburant (16) d'un système d'injection de carburant à rail commun, **caractérisé en ce que** lesdits étapes A à D sont effectuées plusieurs fois, en utilisant à chaque fois une valeur différente pour la pression de carburant dans le rail de carburant (16).

7. Produit de programme informatique, comprenant un support de mémorisation de données qui peut être lu par une unité de commande électronique, et ce support de mémorisation de données comportant un code de programme informatique mémorisé sur celui-ci, ledit code de programme informatique étant agencé de façon à amener une unité de commande électronique à :

- faire injecter par un injecteur d'un cylindre dans un moteur à combustion, durant une succession de courses de puissance dans lesquelles le même temps d'ouverture ($t_{open}$) est appliqué à l'injecteur pour chacune d'entre elles, un carburant dans le cylindre sous la forme d'injections tardives qui se produisent si tard durant les courses de puissance respectives que le carburant ainsi injecté tardivement ne subit pas de combustion dans le cylindre et que ce carburant non brûlé est amené à accompagner les gaz d'échappement produits par le moteur vers un dispositif d'oxydation de carburant situé dans une ligne d'échappement à partir du moteur, afin d'être oxydé dans le dispositif d'oxydation de carburant, et de façon à générer ainsi une augmentation dans la température des gaz d'échappement traversant le dispositif d'oxydation de carburant,

- déterminer une valeur d'augmentation de température ($\Delta T_{BDOC\text{-}ADOC}$) qui représente l'augmentation dans la température des gaz d'échappement durant leur passage à travers le dispositif d'oxydation de carburant en fonction de valeurs mesurées à partir d'un capteur de température (13) disposé de façon à détecter la température des gaz d'échappement en amont du dispositif d'oxydation de carburant (4), et à partir d'un autre capteur de température (14 ; 15) disposé de façon à détecter la température des gaz d'échappement en aval du dispositif d'oxydation de carburant,

- déterminer une valeur de calcul ($\dot{m}_{fuel1}$) qui représente le débit d'écoulement massique dudit carburant injecté non brûlé qui accompagne les gaz d'échappement en fonction de ladite valeur d'augmentation de température ($\Delta T_{BDOC\text{-}ADOC}$), d'une valeur de débit d'écoulement massique de carburant ($\dot{m}_{fuel2}$) représentant le débit d'écoulement massique de carburant injecté dans le moteur et brûlé dans celui-ci et d'une valeur de débit d'écoulement massique d'air ($\dot{m}_{air}$) représentant le débit d'écoulement massique prévalent de l'air dans l'admission d'air du moteur, et

- déterminer une relation entre le temps d'ouverture de l'injecteur et la quantité de carburant injecté par celui-ci en fonction de ladite valeur de calcul ($\dot{m}_{fuel1}$) et de la valeur du temps d'ouverture ($t_{open}$) appliqué à l'injecteur pour lesdites injections tardives.

8. Unité de commande électronique pour un véhicule à moteur, comprenant des moyens d'exécution (41), une mémoire (42) connectée aux moyens d'exécution et un support de mémorisation de données (44) qui est connecté aux moyens d'exécution et qui comporte un code de programme informatique mémorisé sur celui-ci, ledit code de programme informatique étant agencé de façon à amener l'unité de commande électronique à :

   - faire injecter par un injecteur d'un cylindre dans un moteur à combustion, durant une succession de courses de puissance dans lesquelles le même temps d'ouverture ($t_{open}$) est appliqué à l'injecteur pour chacune d'entre elles, un carburant dans le cylindre sous la forme d'injections tardives qui se produisent si tard durant les courses de puissance respectives que le carburant ainsi injecté tardivement ne subit pas de combustion dans le cylindre et que ce carburant non brûlé est amené à accompagner les gaz d'échappement produits par le moteur vers un dispositif d'oxydation de carburant situé dans une ligne d'échappement à partir du moteur, afin d'être oxydé dans le dispositif d'oxydation de carburant, et de façon à générer ainsi une augmentation dans la température des gaz d'échappement traversant le dispositif d'oxydation de carburant,

   - déterminer une valeur d'augmentation de température ($\Delta T_{BDOC\text{-}ADOC}$) qui représente l'augmentation dans la température des gaz d'échappement durant leur passage à travers le dispositif d'oxydation de carburant en fonction de valeurs mesurées à partir d'un capteur de température (13) disposé de façon à détecter la température des gaz d'échappement en amont du dispositif d'oxydation de carburant (4), et à partir d'un autre capteur de température (14 ; 15) disposé de façon à détecter la température des gaz d'échappement en aval du dispositif d'oxydation de carburant,

- déterminer une valeur de calcul ($\dot{m}_{fuel1}$) qui représente le débit d'écoulement massique dudit carburant injecté non brûlé qui accompagne les gaz d'échappement en fonction de ladite valeur d'augmentation de température ($\Delta T_{BDOC\text{-}ADOC}$), d'une valeur de débit d'écoulement massique de carburant ($\dot{m}_{fuel2}$) représentant le débit d'écoulement massique de carburant injecté dans le moteur et brûlé dans celui-ci et d'une valeur de débit d'écoulement massique d'air ($\dot{m}_{air}$) représentant le débit d'écoulement massique prévalent de l'air dans l'admission d'air du moteur, et

- déterminer une relation entre le temps d'ouverture de l'injecteur et la quantité de carburant injecté par celui-ci en fonction de ladite valeur de calcul ($\dot{m}_{fuel1}$) et de la valeur du temps d'ouverture ($t_{open}$) appliqué à l'injecteur pour lesdites injections tardives.

Fig 1

EP 2 550 447 B1

Fig 2

EP 2 550 447 B1

Fig 3

| Injects fuel | A |

Determine $\Delta T_{BDOC-ADOC}$ — B

Determine $\dot{m}_{fuel1}$ — C

Determine relationship between opening time and amount of fuel injected — D

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090164094 A1
- EP 1429009 A1
- FR 2935750 A1
- DE 102006061683 A1
- US 2010050609 A1
- US 2009126346 A1
- US 2010031636 A1